# EUROPEAN PATENT APPLICATION

(11) **EP 4 787 604 A1**
(43) Date of publication of application: **05.08.2026**
(21) Application number: 23953330.0
(22) Date of filing: 25.09.2023
(51) Int. Cl.: H01M 50/531

(54) **ELECTROCHEMICAL APPARATUS, ELECTRIC DEVICE, AND PREPARATION METHOD FOR ELECTROCHEMICAL APPARATUS**

(71) Applicant: Ningde Amperex Technology Limited, Ningde, Fujian 352100 (CN)
(72) Inventor: GAO, Chunlei, Ningde, Fujian 352100 (CN); YANG, Jianhui, Ningde, Fujian 352100 (CN); MA, Wu, Ningde, Fujian 352100 (CN)
(74) Representative: Kraus & Lederer PartGmbB
(86) International application number: PCT/CN2023/121195
(87) International publication number: WO 2025/065165

(57) **Abstract**

An electrochemical apparatus (10) includes a housing (100), an electrode assembly (200), an electrode pole (300), and a first connector (400). A first segment (410) of the first connector (400) is connected a first tab (220) of the electrode assembly (200), a second segment (420) of the first connector (400) is connected to the electrode pole (300), and when viewed along a first direction (X), the first segment (410) and the second segment (420) do not overlap. The housing (100) includes a first sidewall (110) and a second sidewall (120) connected to each other. A shortest distance from a center of the electrode pole (300) to an end face of the first connector (400) along a second direction (Y) is L1, a distance from the center of the electrode pole (300) to a bottom wall (150) of the housing (100) is L2, and a distance from the center of the electrode pole (300) to the second sidewall (120) is L3, satisfying L1≤L2 and L1≤L3.

## Description

### TECHNICAL FIELD

This application relates to the field of battery technology, and specifically relates to an electrochemical apparatus, an electric device, and a preparation method for an electrochemical apparatus.

### BACKGROUND

With the rapid development of new energy technologies, batteries have been widely used in the fields of electronic devices, electric vehicles, electric two-wheeled vehicles, electric tools, and the like, and increasingly high requirements are imposed on the energy density of batteries.

Currently, an electrochemical apparatus is generally provided with a connector for connecting an electrode assembly to an electrode pole. During an assembly process of the electrochemical apparatus, the connection between the connector, the electrode assembly, and the electrode pole is relatively complex, which affects the assembly difficulty and preparation efficiency of the electrochemical apparatus.

### SUMMARY

This application provides an electrochemical apparatus, an electric device, and a preparation method for an electrochemical apparatus, which can reduce the assembly difficulty of the electrochemical apparatus.

An electrochemical apparatus includes:
a housing provided with an accommodation space, where a first through hole is provided in a first sidewall of the housing;
an electrode assembly accommodated in the accommodation space, where the electrode assembly includes a main body and a first tab, and the first tab is disposed on a side of the main body close to the first sidewall;
an electrode pole running through the first through hole; and
a first connector disposed in the accommodation space, where the first connector includes a first segment and a second segment, the first segment is connected to the first tab, the second segment is connected to the electrode pole, and when viewed along a first direction, the first segment and the second segment do not overlap, where the first direction is parallel to an arrangement direction of the electrode assembly and the first sidewall;
where the housing further includes a second sidewall, and the second sidewall is connected to the first sidewall; the first connector includes a first end face and a second end face disposed opposite to each other along a length direction; a distance from the first end face to a center of the electrode pole is less than a distance from the second end face to the center of the electrode pole; and a distance from the center of the electrode pole to the first end face along a second direction is L1, a distance from the center of the electrode pole to a bottom wall of the housing is L2, and a distance from the center of the electrode pole to the second sidewall is L3, satisfying L1≤L2 and L1≤L3.

In the above technical solution, the electrochemical apparatus includes a housing, an electrode assembly, an electrode pole, and a first connector. The housing is provided with an accommodation space capable of accommodating the electrode assembly and the first connector, providing protection for the electrode assembly and the first connector. A first through hole is provided in the first sidewall of the housing, and the electrode pole runs through the first through hole. The electrode assembly includes a main body and a first tab, and the first tab is disposed on a side of the main body close to the first sidewall. The first connector includes a first segment and a second segment, the first segment is connected to the first tab, and the second segment is connected to the electrode pole, enabling the main body to be electrically connected to another apparatus via the first tab, the first connector, and the electrode pole. When viewed along the first direction, the first segment and the second segment do not overlap, and the first direction is parallel to the arrangement direction of the electrode assembly and the first sidewall, allowing the first connector to have a small dimension in the first direction. The first connector occupies a small space in the accommodation space, leaving more space in the accommodation space for accommodating the electrode assembly, thereby allowing the electrode assembly to have a larger volume and increasing the energy density of the electrochemical apparatus. Thus, the distance L1 from the center of the electrode pole to the first end face along the second direction, the distance L2 from the center of the electrode pole to the bottom wall of the housing, and the distance L3 from the center of the electrode pole to the second sidewall satisfy L1≤L2 and L1≤L3, so that during a process in which the electrode assembly and the electrode pole are together rotated into the accommodation space after the first connector is connected to the electrode assembly and the electrode pole, the first connector is less likely to interfere with the housing, achieving a smooth assembly process of the electrochemical apparatus. Moreover, this assembly method can simplify the assembly process of the electrochemical apparatus, reduce the assembly difficulty of the electrochemical apparatus, and improve the preparation efficiency of the electrochemical apparatus.

In some embodiments, a thickness of the housing is H, satisfying 1/2*H≤L2≤H.

In the above technical solution, by ensuring that the thickness H of the housing and the distance L2 from the center of the electrode pole to the bottom wall of the housing satisfy 1/2*H≤L2≤H, the center of the electrode pole is positioned relatively far from the bottom wall of the housing, so that a length of the first connector from the center of the electrode pole to a portion of the first connector close to the first end face of the electrode pole may be set to be large, facilitating the connection between the first connector and the electrode pole. Additionally, a large space can be provided for the rotation of the first connector relative to the housing, reducing the likelihood of interference between the first connector and the housing.

In some embodiments, the distance L2 from the center of the electrode pole to the bottom wall of the housing and the distance L3 from the center of the electrode pole to the second sidewall further satisfy L2=L3. It should be noted that tolerances may occur during the process, and a tolerance range within 0.5 mm is considered normal.

In the above technical solution, ensuring that the distance L2 from the center of the electrode pole to the bottom wall of the housing and the distance L3 from the center of the electrode pole to the second sidewall satisfy L2=L3 can facilitate the rotation of the first connector relative to the housing, reducing the likelihood of interference with the housing, and allows the electrochemical apparatus to have a large energy density. If L2<L3, since L1≤L2, after the first connector is accommodated in the accommodation space, a spacing distance is between the end face of the first connector connected to the electrode pole and the second sidewall is large. After the first connector and the electrode assembly are rotated relative to the housing and placed into the accommodation space, a large gap may exist between the electrode assembly and the second sidewall, resulting in waste of some space in the accommodation space and thus affecting the energy density of the electrochemical apparatus. If L2>L3, since L1≤L2, L1 may be greater than L3, causing the first connector to interfere with the second sidewall during the rotation relative to the housing, thereby making it difficult to put the first connector and the electrode assembly into the housing.

In some embodiments, the distance L3 from the center of the electrode pole to the second sidewall satisfies 3 mm≤X≤15 mm.

In the above technical solution, by ensuring that the distance L3 from the center of the electrode pole to the second sidewall satisfies 3 mm≤L3≤15 mm, a sufficient space is reserved between the center of the electrode pole and the second sidewall for the rotation of the first connector, and the electrochemical apparatus can have a large energy density. If L3 is too large, after the first connector and the electrode assembly are rotated relative to the housing and placed into the accommodation space, a large gap may exist between the electrode assembly and the second sidewall, resulting in waste of some space in the accommodation space and thus affecting the energy density of the electrochemical apparatus. If L3 is too small, the space reserved between the center of the electrode pole and the second sidewall is insufficient, so that the first connector may interfere with the second sidewall during the rotation relative to the housing, making it difficult to put the first connector and the electrode assembly into the housing, or resulting in a short length of the first connector from the center of the electrode pole to a portion of the first connector close to the end face of the electrode pole, thereby leading to inconvenience for connecting the first connector to the electrode pole.

In some embodiments, a spacing distance between the main body and the first sidewall is S, satisfying 1.9 mm≤S≤2.05 mm.

In the above technical solution, by ensuring that the spacing distance S between the main body and the first sidewall satisfies 1.9 mm≤S≤2.05 mm, sufficient space is provided between the main body and the first sidewall to accommodate the first tab, the first connector, and a portion of the electrode pole, reducing the likelihood of problems such as short circuits between the first connector and the main body as well as between the electrode pole and the main body. Additionally, a smaller spacing distance between the main body and the first sidewall allows more space in the accommodation space for accommodating the electrode assembly, enabling the electrode assembly to have a larger volume and thus increasing the energy density of the electrochemical apparatus. In some embodiments, the first connector further includes a third segment, the third segment connects the first segment and the second segment, and the first segment and the second segment respectively extend in opposite directions from the two ends of the third segment.

In the above technical solution, the first connector further includes a third segment, the third segment connects the first segment and the second segment, and the first segment and the second segment respectively extend in opposite directions from the two ends of the third segment. This facilitates a close connection between the first segment and the first tab and facilitates a close connection between the second segment and the electrode pole. Additionally, the first connector does not need to be bent during the assembly process, reducing the safety risk of internal short circuits in the electrochemical apparatus caused by bending of the first connector and simplifying the process of putting the electrode assembly into the housing.

In some embodiments, the first segment is disposed at an angle to the third segment, and the second segment is disposed at an angle to the third segment.

In the above technical solution, since a connection surface between the first tab and the first segment and a connection surface between the electrode pole and the second segment are not on the same plane, arranging the first segment at an angle to the third segment and arranging the second segment at an angle to the third segment can facilitate the connection between the first segment and the first tab and facilitate the connection between the second segment and the electrode pole. Moreover, it allows for a smaller spacing distance between the main body and the first sidewall, providing more space in the accommodation space for accommodating the electrode assembly and enabling the electrode assembly to have a larger volume, thereby increasing the energy density of the electrochemical apparatus.

In some embodiments, the angle between the first segment and the third segment is α, and the angle between the second segment and the third segment is β, satisfying 45°≤α≤90° and 45°≤β≤90°.

In the above technical solution, ensuring that the angle α between the first segment and the third segment and the angle β between the second segment and the third segment satisfy 45°≤α≤90° an d 45°≤β≤90° can further facilitate the connection between the first segment and the first tab and further facilitate the connection between the second segment and the electrode pole.

In some embodiments, the third segment protrudes from the second segment in a direction toward the first sidewall.

In the above technical solution, since the connection surface between the first tab and the first segment is closer to the first sidewall than the connection surface between the electrode pole and the second segment, making the third segment protrude from the second segment toward the direction close to the first sidewall, that is, making the first segment protrudes from the second segment toward the direction close to the first sidewall can facilitate the connection between the first segment and the first tab and facilitate the connection between the second segment and the electrode pole. Additionally, it allows for a smaller spacing distance between the main body and the first sidewall, providing more space in the accommodation space for accommodating the electrode assembly and enabling the electrode assembly to have a larger volume, thereby increasing the energy density of the electrochemical apparatus.

In some embodiments, the first connector is a straight structure.

In the above technical solution, by configuring the first connector as a straight structure, the first connector does not need to be bent, reducing the safety risk of internal short circuits in the electrochemical apparatus caused by bending of the first connector, simplifying the process of putting the first connector into the housing, and making the first connector have a simple structure and be easy to prepare.

In some embodiments, a thickness of the first connector is T, satisfying 0.05 mm≤T≤0.1 mm.

In some embodiments, setting the thickness T of the first connector to 0.05 mm to 0.1 mm allows the first connector to have high strength and makes the first connector less prone to deformation. This ensures a high reliability of the connection between the first connector and the first tab and the connection between the first connector and the electrode pole, and the first connector is less likely to cause damage to other internal components of the electrochemical apparatus. Additionally, the first connector occupies a small space in the first direction, allowing for a smaller spacing distance between the main body and the first sidewall, providing more space in the accommodation space for accommodating the electrode assembly, and enabling the electrode assembly to have a larger volume, thereby increasing the energy density of the electrochemical apparatus.

In some embodiments, the electrode pole includes an electrode pole body, a connection plate, and a sealing member. The connection plate is a metal plate, and the connection plate is disposed at the first through hole and connected to the first sidewall. A second through hole is provided in the connection plate, the electrode pole body runs through the second through hole, the sealing member is disposed between the connection plate and the electrode pole body, and the second segment is connected to the electrode pole body.

In the above technical solution, the electrode pole includes an electrode pole body, a connection plate, and a sealing member. The connection plate is a metal plate, and the connection plate is disposed at the first through hole and connected to the first sidewall, allowing the entire electrode pole to be directly mounted on the first sidewall, with lower preparation and installation difficulty and better universality of the electrode pole. A second through hole is provided in the connection plate, the electrode pole body runs through the second through hole, the sealing member is disposed between the connection plate and the electrode pole body, and the second segment is connected to the electrode pole body, enabling the sealing member to achieve sealing between the connection plate and the electrode pole body. The connection plate is connected to the first sidewall and can achieve sealing between the housing and the electrode pole, providing a good sealing effect for the electrochemical apparatus.

In some embodiments, the electrode pole body includes a first conductive portion, a second conductive portion, and a third conductive portion. The first conductive portion is located on a first side of the connection plate along a thickness direction of the connection plate, the second conductive portion is located on a second side of the connection plate opposite to the first side along the thickness direction of the connection plate, the third conductive portion runs through the second through hole, and the third conductive portion electrically connects the first conductive portion and the second conductive portion.

The sealing member includes a first sealing member and a second sealing member. The first sealing member is disposed between the first conductive portion and the connection plate, and the second sealing member is disposed between the second conductive portion and the connection plate.

In the above technical solution, the electrode pole body includes a first conductive portion, a second conductive portion, and a third conductive portion. The first conductive portion, located on the first side of the connection plate along the thickness direction of the connection plate, can be used to achieve electrical connection with another apparatus located on the first side of the connection plate. The second conductive portion, located on the second side of the connection plate opposite to the first side along the thickness direction of the connection plate, can be used to achieve electrical connection with another apparatus located on the second side of the connection plate. The third conductive portion runs through the second through hole and the third conductive portion electrically connects the first conductive portion and the second conductive portion, enabling electrical connection between a component electrically connected to the first conductive portion and a component electrically connected to the second conductive portion. The sealing member includes a first sealing member and a second sealing member. The first sealing member, disposed between the first conductive portion and the connection plate, can achieve sealing between the first conductive portion and the connection plate. The second sealing portion, disposed between the second conductive portion and the connection plate, can achieve sealing between the second conductive portion and the connection plate. By providing the two sealing members which are the first sealing member and the second sealing member, the reliability of the sealing between the electrode pole body and the connection plate can be improved.

In some embodiments, the first conductive portion and the third conductive portion are integrally formed, the second conductive portion is provided with an insertion hole, and a portion of the third conductive portion is inserted into the insertion hole and electrically connected to the second conductive portion within the insertion hole.

In the above technical solution, the first conductive portion and the third conductive portion are integrally formed, so that the overall structure of the first conductive portion and the third conductive portion is more stable, and a preparation process of the electrode pole body is simpler. By providing an insertion hole in the second conductive portion and making a portion of the third conductive portion be inserted into the insertion hole and be electrically connected to the second conductive portion within the insertion hole, the second conductive portion and the third conductive portion can be connected through insertion, and the second conductive portion is less likely to move relative to the third conductive portion, making the overall structure of the electrode pole body more stable and improving the reliability of the electrical connection between the second conductive portion and the third conductive portion.

In some embodiments, a diameter D of the first through hole satisfies 1 mm≤D≤10 mm.

In the above technical solution, by setting the diameter D of the first through hole to 1 mm to 10 mm, the first through hole has sufficient space to allow the electrode pole to pass through. Additionally, when the electrode pole is mounted on the first sidewall, an edge of the electrode pole is less likely to extend beyond an edge of the first sidewall, reducing the likelihood of increasing the space occupied by the electrochemical apparatus and also reducing the possibility of interference between the electrode pole and other apparatuses.

In some embodiments, the electrode assembly further includes a second tab having a polarity opposite to a polarity of the first tab, and the second tab is disposed on a side of the main body close to the first sidewall. The electrochemical apparatus further includes a second connector, and the second connector electrically connects the second tab and the housing.

In the above technical solution, the electrode assembly further includes a second tab having a polarity opposite to a polarity of the first tab, and the second tab is disposed on a side of the main body close to the first sidewall, allowing the first tab and the second tab to share a spacing space between the main body and the first sidewall, thereby reducing the space occupied by the first tab and the second tab and facilitating an increase in the energy density of the electrochemical apparatus. The electrochemical apparatus further includes a second connector, and the second connector electrically connects the second tab and the housing, enabling the main body to achieve electrical connection with another apparatus via the second tab, the second connector, and the housing, so that the other apparatuses that are respectively electrically connected to the electrode pole and the housing can form a complete electrical connection loop with the electrochemical apparatus.

In some embodiments, the second connector is U-shaped.

In the above technical solution, configuring the second connector in a U shape facilitates the connection of the second connector to the second tab and the housing respectively after the electrode assembly is mounted into the housing.

An electric device includes the electrochemical apparatus as described above, where the electrochemical apparatus is configured to provide electrical energy.

A preparation method for an electrochemical apparatus includes:
providing a housing, an electrode assembly, an electrode pole, and a first connector, where a first through hole is provided in a first sidewall of the housing;
making the electrode pole run through the first through hole;
connecting the electrode pole to a first segment of the first connector, and positioning a second segment of the first connector outside the housing, where an included angle between a length direction of the first connector and an edge of the first sidewall is set to 45° to 90°;
connecting a first tab of the electrode assembly to the second segment of the first connector;
rotating the electrode assembly, the first connector, and the electrode pole together around the first through hole, to allow the electrode assembly to be mounted into an accommodation space of the housing; and
fixing the electrode pole to the housing.

In the above technical solution, the electrode pole is first connected to the first segment of the first connector without obstruction from the main body of the electrode assembly, achieving convenient connection operation. The second segment of the first connector is positioned outside the housing, and the first tab of the electrode assembly is connected to the second segment of the first connector located outside the housing, without obstruction from other components, achieving convenient connection operation. Then, the electrode assembly, the first connector, and the electrode pole are rotated together around the first through hole, to allow the electrode assembly to be mounted into the accommodation space of the housing. This means that before the electrode assembly is mounted into the accommodation space, the connection between the first segment of the first connector and the electrode pole as well as the connection between the second segment of the first connector and the first tab of the electrode assembly are achieved, so that more convenient connection operation is achieved. Additionally, there is no need to reserve some space of the accommodation space for connecting the first connector to the electrode pole and connecting the first connector to the tab, reducing the space occupied by the first connector, reducing the spacing distance between the main body of the electrode assembly and the first sidewall, providing more space in the accommodation space for accommodating the electrode assembly, and enabling the electrode assembly to have a larger volume, thereby increasing the energy density of the electrochemical apparatus. When the second segment of the first connector is located outside the housing, the included angle between the length direction of the first connector and the edge of the first sidewall is set to 45° to 90°, which can facilitate the connection between the second segment of the first connector and the first tab of the electrode assembly and also facilitates the rotation of the electrode assembly, the first connector, and the electrode pole together around the first through hole after the second segment of the first connector is connected to the first tab, allowing the electrode assembly to be mounted into the accommodation space of the housing.

### BRIEF DESCRIPTION OF DRAWINGS

To more clearly illustrate the technical solutions of some embodiments of this application, the drawings required for use in these embodiments are briefly introduced below. It should be understood that the following drawings only show some embodiments of this application and should not be considered as limiting the scope. For those of ordinary skill in the art, other related drawings can also be obtained based on these drawings.
FIG. 1 is a schematic three-dimensional structural diagram of an electrochemical apparatus according to some embodiments of this application;
FIG. 2 is a schematic structural exploded view of an electrochemical apparatus according to some embodiments of this application;
FIG. 3 is a schematic structural diagram of a housing and a first connector of an electrochemical apparatus from one perspective according to some embodiments of this application;
FIG. 4 is a schematic three-dimensional structural diagram of a first connector of an electrochemical apparatus according to some embodiments of this application;
FIG. 5 is a schematic structural diagram of an electrochemical apparatus from one perspective according to some embodiments of this application;
FIG. 6 is a schematic enlarged view of a partial structure at position A of the electrochemical apparatus in FIG. 5;
FIG. 7 is a schematic structural diagram of a first connector of an electrochemical apparatus from one perspective according to some embodiments of this application;
FIG. 8 is a schematic three-dimensional structural diagram of an electrode pole of an electrochemical apparatus according to some embodiments of this application;
FIG. 9 is a schematic structural diagram of an electrode pole of an electrochemical apparatus from one perspective according to some embodiments of this application;
FIG. 10 is a schematic structural cross-sectional view of an electrode pole of an electrochemical apparatus according to some embodiments of this application;
FIG. 11 is a schematic structural exploded view of the electrode pole of an electrochemical apparatus according to some embodiments of this application;
FIG. 12 is a schematic structural diagram of a housing of an electrochemical apparatus from one perspective according to some embodiments of this application;
FIG. 13 is a schematic flowchart of a preparation method for an electrochemical apparatus according to some embodiments of this application;
FIG. 14 is a schematic three-dimensional diagram of a partial structure of an electrochemical apparatus according to some embodiments of this application;
FIG. 15 is a schematic three-dimensional diagram of a partial structure of an electrochemical apparatus according to some embodiments of this application;
FIG. 16 is a schematic diagram of a partial structure of an electrochemical apparatus from one perspective according to some embodiments of this application;
FIG. 17 is a schematic three-dimensional diagram of a partial structure of an electrochemical apparatus according to some embodiments of this application; and
FIG. 18 is a schematic three-dimensional diagram of a partial structure of an electrochemical apparatus according to some embodiments of this application.

Reference signs: 10. electrochemical apparatus; 100. housing; 101. accommodation space; 102. first through hole; 110. first sidewall; 120. second sidewall; 130. third sidewall; 140. fourth sidewall; 150. bottom wall; 200. electrode assembly; 210. main body; 211. first side surface; 220. first tab; 230. second tab; 300. electrode pole; 301. second through hole; 302. insertion hole; 310. electrode pole body; 311. first conductive portion; 312. second conductive portion; 3121. second end face; 313. third conductive portion; 3131. first part; 3132. second part; 3133. step surface; 3134. third end face; 320. connection plate; 330. sealing member; 331. first sealing member; 332. second sealing member; 400. first connector; 410. first segment; 420. second segment; 430. third segment; 500. second connector; 600. housing cover; X. first direction; Y. second direction; and Z. third direction.

### DETAILED DESCRIPTION

To make the objectives, technical solutions, and advantages of this application clearer, the technical solutions in some embodiments of this application are described clearly below with reference to the drawings in these embodiments of this application. Obviously, the described embodiments are only some embodiments rather than all embodiments of this application. Based on some embodiments in this application, all other embodiments obtained by those of ordinary skill in the art fall within the scope of protection of this application.

Unless otherwise defined, all technical and scientific terms used in this application have the same meanings as commonly understood by those skilled in the technical field of this application. The terms used in the specification of this application are only for the purpose of describing specific embodiments and are not intended to limit this application. The terms "include", "comprise", any variations thereof in the specification, claims, and the above description of the drawings of this application are intended to cover non-exclusive inclusion.

The terms "first", "second", and the like in the specification, claims, or the above description of the drawings of this application are used to distinguish different objects, rather than to describe a specific order or primary-secondary relationship.

Reference to "embodiment" in this application means that a specific feature, structure, or characteristic described in connection with this embodiment may be included in at least one embodiment of this application. The appearance of this phrase in various places in the specification does not necessarily refer to the same embodiment, nor is it an independent or alternative embodiment mutually exclusive with other embodiments.

In some embodiments of this application, the same reference numerals denote the same components, and for brevity, detailed descriptions of the same components are omitted in different embodiments. It should be understood that the dimensions such as thickness, length, and width of various components in some embodiments of this application shown in the drawings, as well as the overall thickness, length, and width of integrated apparatuses, are merely illustrative and should not constitute any limitation to this application.

An electrochemical apparatus includes a housing, an electrode assembly, and an electrode pole penetrating through the housing. The electrode assembly is disposed within the housing, where one end of the electrode pole is electrically connected to a tab of the electrode assembly via a connector, and the other end is exposed outside the housing, enabling the main body of the electrode assembly to achieve electrical connection with another apparatus through the electrode pole.

With the development of the new energy industry, batteries are gradually developed toward large energy density and large power density. However, currently, when the connector connects the electrode pole and the tab of the electrode assembly, the electrode assembly is generally first mounted into the accommodation space of the housing, and then the connector is welded to the electrode pole and the tab separately. Therefore, a space needs to be reserved between the main body of the electrode assembly and the first sidewall of the housing where the electrode pole is provided, to facilitate welding of the connector to the electrode pole and the tab. However, this limits the space available for accommodating the electrode assembly, affecting the energy density of the battery. Additionally, welding of the connector to the electrode pole and the tab needs to be performed in a narrow space, causing complexity in welding operation and large assembly difficulty of the electrochemical apparatus, and resulting in low preparation efficiency of the electrochemical apparatus.

Based on the above considerations, to address the problem of large assembly difficulty of electrochemical apparatuses, this application provides an electrochemical apparatus, where the electrochemical apparatus includes a housing, an electrode assembly, an electrode pole, and a first connector. The housing is provided with an accommodation space, with a first through hole provided in a first sidewall of the housing. The electrode assembly is accommodated in the accommodation space, the electrode assembly includes a main body and a first tab, and the first tab is disposed on a side of the main body close to the first sidewall. The electrode pole runs through the first through hole. The first connector is disposed in the accommodation space, the first connector includes a first segment and a second segment, the first segment is connected to the first tab, and the second segment is connected to the electrode pole. When viewed along a first direction, the first segment and the second segment do not overlap, and the first direction is parallel to an arrangement direction of the electrode assembly and the first sidewall. The housing further includes a second sidewall, and the second sidewall is connected to the first sidewall. The first connector includes a first end face and a second end face disposed opposite to each other along a length direction. A distance from the first end face to a center of the electrode pole is less than a distance from the second end face to the center of the electrode pole. A distance from the center of the electrode pole to the first end face along a second direction is L1, a distance from the center of the electrode pole to a bottom wall of the housing is L2, and a distance from the center of the electrode pole to the second sidewall is L3, satisfying L1≤L2 and L1≤L3. The housing is provided with an accommodation space capable of accommodating the electrode assembly and the first connector, providing protection for the electrode assembly and the first connector. A first through hole is provided in the first sidewall of the housing, and the electrode pole runs through the first through hole. The electrode assembly includes a main body and a first tab, and the first tab is disposed on a side of the main body close to the first sidewall. The first connector includes a first segment and a second segment, the first segment is connected to the first tab, and the second segment is connected to the electrode pole, enabling the main body to achieve electrical connection with another apparatus via the first tab, the first connector, and the electrode pole. When viewed along the first direction, the first segment and the second segment do not overlap, and the first direction is parallel to the arrangement direction of the electrode assembly and the first sidewall, allowing the first connector to have a small dimension in the first direction. The first connector occupies a small space in the accommodation space, leaving more space in the accommodation space for accommodating the electrode assembly, thereby allowing the electrode assembly to have a larger volume and thus increasing the energy density of the electrochemical apparatus. The shortest distance L1 from the center of the electrode pole to the first end face along the second direction, the distance L2 from the center of the electrode pole to the bottom wall of the housing, and the distance L3 from the center of the electrode pole to the second sidewall satisfy L1≤L2 and L1≤L3, so that during the process of rotating the electrode assembly and the electrode pole together into the accommodation space after the first connector is connected to the electrode assembly and the electrode pole, the first connector is less likely to interfere with the housing, achieving a smooth assembly process of the electrochemical apparatus. Moreover, this assembly method can simplify the assembly process of the electrochemical apparatus, reduce the assembly difficulty of the electrochemical apparatus, and improve the preparation efficiency of the electrochemical apparatus.

In this application, the electrochemical apparatus may be a secondary battery or a primary battery. For example, the electrochemical apparatus may be a lithium-ion battery, a sodium-ion battery, a magnesium-ion battery, or the like, which is not limited in some embodiments of this application. The electrochemical apparatus may be cylindrical, flat, rectangular, or of other shapes, which is also not limited in some embodiments of this application. The electrode assembly may be a wound structure or a stacked structure, which is not limited in some embodiments of this application.

An embodiment of this application provides an electric device using an electrochemical apparatus as a power source. The electric device may include, but is not limited to, mobile phones, tablets, laptops, electric toys, electric tools, electric bicycles, electric vehicles, ships, and spacecraft, where electric toys may include fixed or mobile electric toys, such as game consoles, electric toy cars, electric toy ships, and electric toy airplanes. Spacecraft may include airplanes, rockets, space shuttles, spaceships, and the like.

The electrochemical apparatus described in this embodiment of this application is not limited to being applied to the electric device described above but can also be applied to all electric device using electrochemical apparatuses.

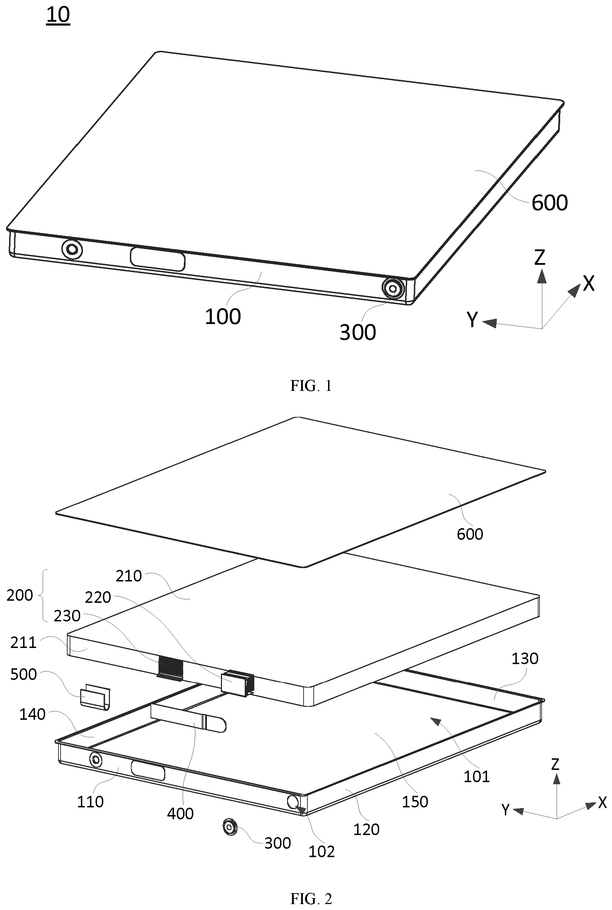

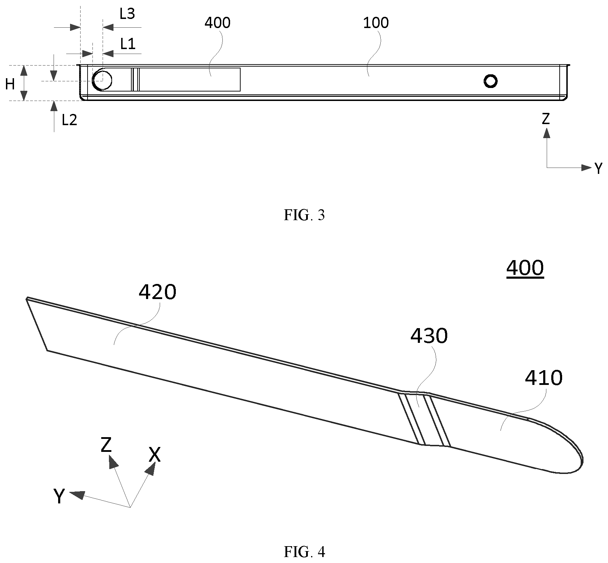

Referring to FIGs. 1 to 4, FIG. 1 is a schematic three-dimensional structural diagram of an electrochemical apparatus according to some embodiments of this application; FIG. 2 is a schematic structural exploded view of an electrochemical apparatus according to some embodiments of this application; FIG. 3 is a schematic structural diagram of a housing and a first connector of an electrochemical apparatus from one perspective according to some embodiments of this application; and FIG. 4 is a schematic three-dimensional structural diagram of a first connector of an electrochemical apparatus according to some embodiments of this application.

An embodiment of this application provides an electrochemical apparatus 10 including a housing 100, an electrode assembly 200, an electrode pole 300, and a first connector 400. The housing 100 is provided with an accommodation space 101, and a first through hole 102 is provided in a first sidewall 110 of the housing 100. The electrode assembly 200 is accommodated in the accommodation space 101, the electrode assembly 200 includes a main body 210 and a first tab 220, and the first tab 220 is disposed on a side of the main body 210 close to the first sidewall 110. The electrode pole 300 runs through the first through hole 102. The first connector 400 is disposed in the accommodation space 101, the first connector 400 includes a first segment 410 and a second segment 420, the first segment 410 is connected to the first tab 220, and the second segment 420 is connected to the electrode pole 300. When viewed along a first direction X, the first segment 410 and the second segment 420 do not overlap, and the first direction X is parallel to an arrangement direction of the electrode assembly 200 and the first sidewall 110. The housing 100 further includes a second sidewall 120, and the second sidewall 120 is connected to the first sidewall 110. A distance from a center of the electrode pole 300 to a first end face of the first connector 400 along a second direction Y is L1, a distance from the center of the electrode pole 300 to a bottom wall 150 of the housing 100 is L2, and a distance from the center of the electrode pole 300 to the second sidewall 120 is L3, satisfying L1≤L2 and L1≤L3. For example, L1=L2, L1=0.5*L2, L1=L3, L1=0.6*L3, and the like.

In some embodiments, the main body 210 includes a positive electrode plate, a negative electrode plate, and a separator. The housing 100 is also configured to accommodate an electrolyte. The electrochemical apparatus 10 operates primarily depending on the movement of metal ions between the positive electrode plate and the negative electrode plate. The positive electrode plate includes a positive current collector and a positive active material layer, the positive active material layer is applied on a surface of the positive current collector, and a portion of the positive current collector not coated with the positive active material layer serves as a positive electrode tab to enable input or output of electrical energy of the positive electrode plate through the positive electrode tab. Taking a lithium-ion battery as an example, the positive current collector may be made of aluminum, and a positive active material may be lithium cobalt oxide, lithium iron phosphate, a ternary material, lithium manganese oxide, or the like. The negative electrode plate includes a negative current collector and a negative active material layer, the negative active material layer is applied on a surface of the negative current collector, and a portion of the negative current collector not coated with the negative active material layer serves as a negative electrode tab to enable input or output of electrical energy of the negative electrode plate through the negative electrode tab. The negative current collector may be made of copper, and a negative active material may be a carbon material, a silicon material, or the like. The separator may be made of polypropylene (PP), polyethylene (PE), or the like. Additionally, the electrode assembly may be a wound structure or a stacked structure, which is not limited in these embodiments of this application.

In some embodiments, the main body 210 has a first side surface 211 and a second side surface (not labeled in the figure) opposite to the first sidewall 110 along the first direction X. Along the first direction X, a distance between the first side surface 211 and the first sidewall 110 is less than a distance between the second side surface and the first sidewall 110. The first tab 220 is disposed on a side of the main body 210 close to the first sidewall 110, that is, the first tab 220 is disposed on the first side surface 211 of the main body 210.

In some embodiments, the first segment 410 and the first tab 220 may be connected by welding, such as laser welding. By welding the first segment 410 to the first tab 220, a large connection force is provided between the first segment 410 and the first tab 220, making the first segment 410 less likely to detach from the first tab 220.

In some embodiments, the second segment 420 and the electrode pole 300 may be connected by welding, such as laser welding. By welding the second segment 420 to the electrode pole 300, a large connection force is provided between the second segment 420 and the electrode pole 300, making the second segment 420 less likely to detach from the electrode pole 300.

In some embodiments, the housing 100 includes multiple sidewalls and a bottom wall 150. The multiple sidewalls include the first sidewall 110, the second sidewall 120, a third sidewall 130, and a fourth sidewall 140. The first sidewall 110 is opposite to the third sidewall 130, the second sidewall 120 is opposite to the fourth sidewall 140, the first sidewall 110 is connected to the second sidewall 120 and the fourth sidewall 140, respectively, and the third sidewall 130 is connected to the second sidewall 120 and the fourth sidewall 140, respectively.

In these embodiments, the first direction X is a length direction of the second sidewall 120, the second direction Y is a length direction of the first sidewall 110, and a third direction Z is a thickness direction of the electrochemical apparatus 10. The first direction X, the second direction Y, and the third direction Z are perpendicular to each other.

In some embodiments, the electrochemical apparatus 10 further includes a housing cover 600, and the housing cover 600 is disposed on the housing 100. The first sidewall 110, the second sidewall 120, the third sidewall 130, the fourth sidewall 140, the bottom wall 150, and the housing cover 600 together enclose a closed accommodation space 101.

In some embodiments, the housing cover 600 is plate-shaped and the housing cover 600 is capable of sealing an opening formed on the housing 100.

In some other embodiments, the housing cover 600 may alternatively be a hollow structure with an opening at one end, where the open side of the housing cover 600 covers the open side of the housing 100 to form the accommodation space.

In some embodiments, the housing 100 and the housing cover 600 may be made of materials such as aluminum, nickel, or stainless steel, allowing the housing 100 and the housing cover 600 to achieve high stress withstand performance, resistance to rust, and long service life.

In some embodiments, the housing cover 600 and the housing 100 may be connected by welding, such as laser welding. By welding the housing cover 600 to the housing 100, a large connection force is achieved between the housing cover 600 and the housing 100, making the housing cover 600 less likely to detach from the housing 100.

In some embodiments, the housing cover 600 and the housing 100 may be made of a same metal material, facilitating welding between the housing cover 600 and the housing 100.

The electrochemical apparatus 10 includes a housing 100, an electrode assembly 200, an electrode pole 300, and a first connector 400. The housing 100 is provided with an accommodation space 101 capable of accommodating the electrode assembly 200 and the first connector 400, providing protection for the electrode assembly 200 and the first connector 400. A first through hole 102 is provided in the first sidewall 110 of the housing 100, and the electrode pole 300 runs through the first through hole 102. The electrode assembly 200 includes a main body 210 and a first tab 220, and the first tab 220 is disposed on a side of the main body 210 close to the first sidewall 110. The first connector 400 includes a first segment 410 and a second segment 420, the first segment 410 is connected to the first tab 220, and the second segment 420 is connected to the electrode pole 300, enabling the main body 210 to achieve electrical connection with another apparatus (not shown in the figure) via the first tab 220, the first connector 400, and the electrode pole 300. When viewed along the first direction X, the first segment 410 and the second segment 420 do not overlap, and the first direction X is parallel to the arrangement direction of the electrode assembly 200 and the first sidewall 110, allowing the first connector 400 to have a small dimension in the first direction X. The first connector 400 occupies a small space in the accommodation space 101, leaving more space in the accommodation space 101 for accommodating the electrode assembly 200, thereby allowing the electrode assembly 200 to have a larger volume and thus increasing the energy density of the electrochemical apparatus 10. The distance L1 from the center of the electrode pole 300 to the first end face of the first connector 400 along the second direction Y, the distance L2 from the center of the electrode pole 300 to the bottom wall 150 of the housing 100, and the distance L3 from the center of the electrode pole 300 to the second sidewall 120 satisfy L1≤L2 and L1≤L3, so that during the process of rotating the electrode assembly 200 and the electrode pole 300 together into the accommodation space after the first connector 400 is connected to the electrode assembly 200 and the electrode pole 300, the first connector is less likely to interfere with the housing, achieving a smooth assembly process of the electrochemical apparatus. Moreover, this assembly method can simplify the assembly process of the electrochemical apparatus 10, reduce the assembly difficulty of the electrochemical apparatus 10, and improve the preparation efficiency of the electrochemical apparatus 10.

In some embodiments, a thickness of the housing 100 is H, satisfying 1/2*H≤L2≤H. For example, L2 may be 1/2*H, 4/5*H, or H.

By ensuring that the thickness H of the housing 100 and the distance L2 from the center of the electrode pole 300 to the bottom wall 150 of the housing 100 satisfy 1/2*H≤L2≤H, the center of the electrode pole 300 is positioned relatively far from the bottom wall 150 of the housing 100, so that a length of the first connector 400 from the center of the electrode pole 300 to a portion of the first connector 400 close to the end face of the electrode pole 300 may be set to be large, facilitating the connection between the first connector 400 and the electrode pole 300. Additionally, a large space is provided for the rotation of the first connector 400 relative to the housing 100, reducing the likelihood of interference between the first connector 400 and the housing 100.

In some embodiments, the distance L2 from the center of the electrode pole 300 to the bottom wall 150 of the housing 100 and the distance L3 from the center of the electrode pole 300 to the second sidewall 120 further satisfy L2=L3. It should be noted that tolerances may occur during the process, and a tolerance range within 0.5 mm is considered normal.

Ensuring that the distance L2 from the center of the electrode pole 300 to the bottom wall 150 of the housing 100 and the distance L3 from the center of the electrode pole 300 to the second sidewall 120 further satisfy L2=L3 can facilitate the rotation of the first connector 400 relative to the housing 100, reduce the likelihood of interference with the housing 100, and allow for a large energy density of the electrochemical apparatus 10. If L2<L3, since L1≤L2, after the first connector 400 is accommodated in the accommodation space, a spacing distance between the end face of the first connector 400 connected to the electrode pole 300 and the second sidewall 120 is large, and after the first connector 400 and the electrode assembly 200 are rotated relative to the housing 100 and placed into the accommodation space, a large gap may exist between the electrode assembly 200 and the second sidewall 120, resulting in waste of some space in the accommodation space and affecting the energy density of the electrochemical apparatus 10. If L2>L3, since L1≤L2, L1 may be greater than L3, causing the first connector 400 to interfere with the second sidewall 120 during the rotation relative to the housing 100, thereby making it difficult to put the first connector 400 and the electrode assembly 200 into the housing.

In some embodiments, the distance L3 from the center of the electrode pole 300 to the second sidewall 120 satisfies 3 mm≤X≤15 mm. For example, L3 may be 3 mm, 8 mm, or 15 mm.

In some embodiments, the electrode pole 300 is circular, and the center of the electrode pole 300 is the circle center of the electrode pole 300.

By ensuring that the distance L3 from the center of the electrode pole 300 to the second sidewall 120 satisfies 3 mm≤L3≤15 mm, a sufficient space is reserved between the center of the electrode pole 300 and the second sidewall 120 for the rotation of the first connector 400, and the electrochemical apparatus 10 has a large energy density. If L3 is too large, after the first connector 400 and the electrode assembly 200 are rotated relative to the housing 100 and placed into the accommodation space, a large gap may exist between the electrode assembly 200 and the second sidewall 120, resulting in waste of some space in the accommodation space and affecting the energy density of the electrochemical apparatus 10. If L3 is too small, the space reserved between the center of the electrode pole 300 and the second sidewall 120 is insufficient, so that the first connector 400 may interfere with the second sidewall 120 during the rotation relative to the housing 100, making it difficult to put the first connector 400 and the electrode assembly 200 into the housing, or resulting in a short length of the first connector 400 from the center of the electrode pole 300 to the portion of the first connector 400 close to the end face of the electrode pole 300, thereby causing inconvenience for connection between the first connector 400 and the electrode pole 300.

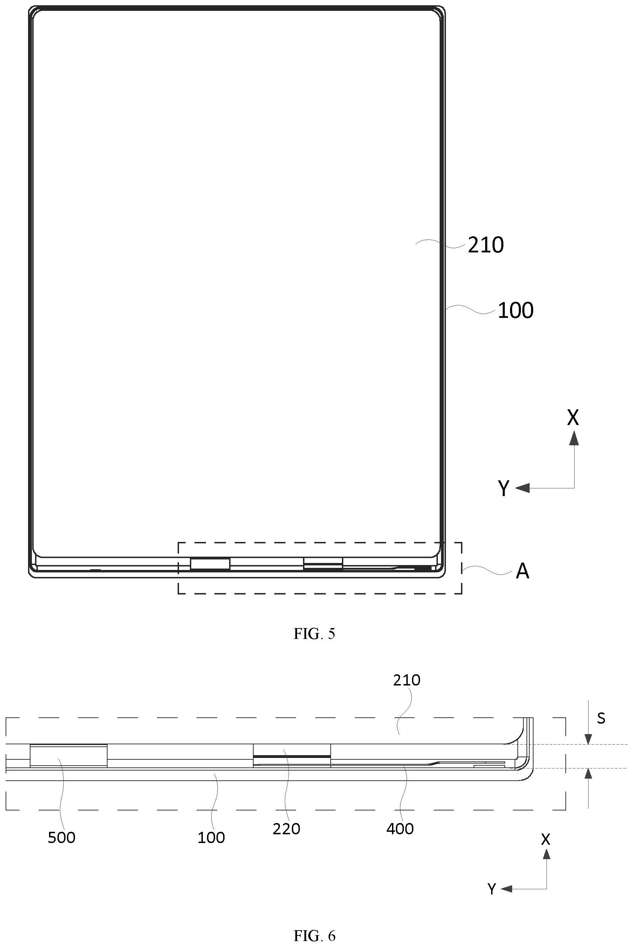

Referring to FIGs. 5 and 6, FIG. 5 is a schematic structural diagram of an electrochemical apparatus from one perspective according to some embodiments of this application; and FIG. 6 is a schematic enlarged view of a partial structure at position A of the electrochemical apparatus in FIG. 5.

In some embodiments, a spacing distance between the main body 210 and the first sidewall 110 is S, satisfying 1.9 mm≤S≤2.05 mm.

By ensuring that the spacing distance S between the main body 210 and the first sidewall 110 satisfies 1.9 mm≤S≤2.05 mm, a sufficient space is provided between the main body 210 and the first sidewall 110 to accommodate the first tab 220, the first connector 400, and a portion of the electrode pole 300, reducing the likelihood of problems such as short circuits between the first connector 400 and the main body 210 and between the electrode pole 300 and the main body 210. Additionally, the reduced spacing distance between the main body 210 and the first sidewall 110 allows more space in the accommodation space 101 for accommodating the electrode assembly 200, enabling the electrode assembly 200 to have a larger volume, thereby increasing the energy density of the electrochemical apparatus 10.

In some embodiments, an end portion of the first segment 410 may be arc-shaped, facilitating adaptive connection with the circular electrode pole 300. Additionally, when rotating around the first through hole 102, the first connector 400 is less likely to interfere with other components, reducing the likelihood of damage to the first connector 400 or other components.

In some embodiments, an end portion of the second segment 420 may be square, facilitating adaptive connection with the first tab 220, providing a large connection area between the second segment 420 and the first tab 220, resulting in high connection strength, and making the second segment 420 less likely to detach from the first tab 220.

In some embodiments, the first connector 400 further includes a third segment 430, the third segment 430 connects the first segment 410 and the second segment 420, and the first segment 410 and the second segment 420 respectively extend in opposite directions from the two ends of the third segment 430.

The third segment 430 is provided at the first connector 400, the third segment 430 connects the first segment 410 and the second segment 420, and the first segment 410 and the second segment 420 respectively extend in opposite directions from the two ends of the third segment 430. This can facilitate a close connection between the first segment 410 and the first tab 220 and facilitate a close connection between the second segment 420 and the electrode pole 300. Additionally, the first connector 400 does not need to be bent during assembly, reducing the safety risk of internal short circuits in the electrochemical apparatus caused by bending of the first connector 400 and simplifying the process of putting the electrode assembly 200 into the housing.

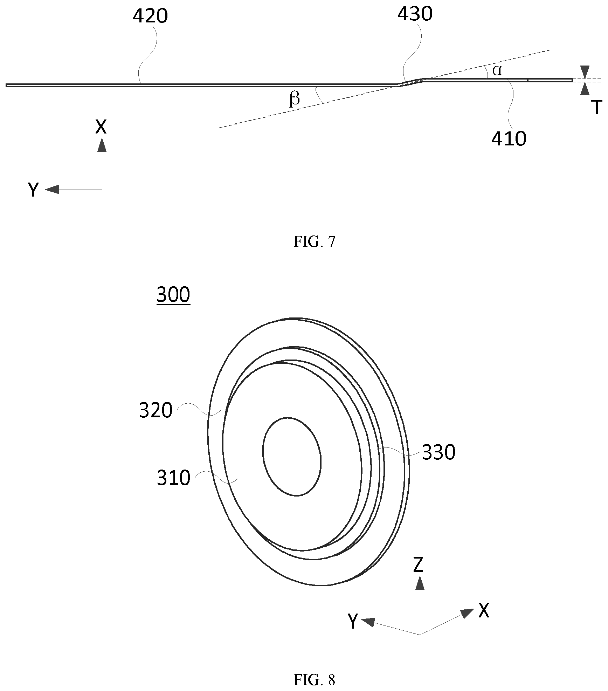

Referring to FIGs. 4 and 7, FIG. 7 is a schematic structural diagram of a first connector of an electrochemical apparatus from one perspective according to some embodiments of this application.

In some embodiments, the first segment 410 is disposed at an angle to the third segment 430, and the second segment 420 is disposed at an angle to the third segment 430. For example, as shown in FIG. 7, an included angle between a length direction of the first segment 410 and a length direction of the third segment 430 is α, and an included angle between a length direction of the second segment 420 and the length direction of the third segment 430 is β.

Since a connection surface between the first tab 220 and the first segment 410 and a connection surface between the electrode pole 300 and the second segment 420 are not on the same plane, arranging the first segment 410 at an angle to the third segment 430 and arranging the second segment 420 at an angle to the third segment 430 can facilitate the connection between the first segment 410 and the first tab 220 and facilitate the connection between the second segment 420 and the electrode pole 300. Moreover, it allows for a smaller spacing distance between the main body 210 and the first sidewall 110, providing more space in the accommodation space 101 for accommodating the electrode assembly 200 and enabling the electrode assembly 200 to have a larger volume, thereby increasing the energy density of the electrochemical apparatus 10.

In some embodiments, the angle between the first segment 410 and the third segment 430 is α, and the angle between the second segment 420 and the third segment 430 is β, satisfying 45°≤α≤90° and 45°≤β≤90°. For example, α may be 45°, 60°, 90°, or the like, and β may be 45°, 70°, 90°, or the like.

Ensuring that the angle α between the first segment 410 and the third segment 430 and the angle β between the second segment 420 and the third segment 430 satisfy 45°≤α≤90° and 45°≤β≤90° can further facilitate the connection between the first segment 410 and the first tab 220 and further facilitate the connection between the second segment 420 and the electrode pole 300.

In some embodiments, the third segment 430 protrudes from the second segment 420 in a direction toward the first sidewall 110.

Since a connection surface between the first tab 220 and the first segment 410 is closer to the first sidewall 110 than a connection surface between the electrode pole 300 and the second segment 420, making the third segment 430 protrude from the second segment 420 toward the direction close to the first sidewall 110, that is, making the first segment 410 protrude from the second segment 420 toward the direction close to the first sidewall 110 can facilitate the connection between the first segment 410 and the first tab 220 and facilitate the connection between the second segment 420 and the electrode pole 300. Additionally, it allows for a smaller spacing distance between the main body 210 and the first sidewall 110, providing more space in the accommodation space 101 for accommodating the electrode assembly 200 and enabling the electrode assembly 200 to have a larger volume, thereby increasing the energy density of the electrochemical apparatus 10.

In some embodiments, the first segment 410, the second segment 420, and the third segment 430 may be integrally formed.

In some other embodiments, the first segment 410, the second segment 420, and the third segment 430 may alternatively be separately prepared and then fixedly connected by welding, bonding, or other methods.

In some embodiments, the third segment 430 may be a straight structure, an arc-shaped structure, or the like.

In some other embodiments, the first connector 400 is a straight structure.

By configuring the first connector 400 as a straight structure, the first connector 400 does not need to be bent, reducing the safety risk of internal short circuits in the electrochemical apparatus 10 caused by bending of the first connector 400, simplifying the process of putting the first connector 400 into the housing, and making the first connector 400 have a simple structure and easy to prepare.

In some embodiments, a thickness of the first connector 400 is T, satisfying 0.05 mm≤T≤0.1 mm. For example, T may be 0.05 mm, 0.08 mm, 0.1 mm, or the like.

Setting the thickness T of the first connector 400 to 0.05 mm to 0.1 mm allows the first connector 400 to have high strength and less prone to deformation. This ensures a high reliability of the connection between the first connector 400 and the first tab 220 as well as the connection between the first connector 400 and the electrode pole 300, and makes the first connector 400 less likely to damage to other internal components of the electrochemical apparatus 10. Additionally, the first connector 400 occupies a small space in the first direction X, allowing for a smaller spacing distance between the main body 210 and the first sidewall 110, providing more space in the accommodation space 101 for accommodating the electrode assembly 200, and enabling the electrode assembly 200 to have a larger volume, thereby increasing the energy density of the electrochemical apparatus 10.

In some embodiments, the first connector 400 may be made of materials such as steel or nickel, which are resistant to rust, have a long service life, and facilitate welding with the first tab 220 and the electrode pole 300.

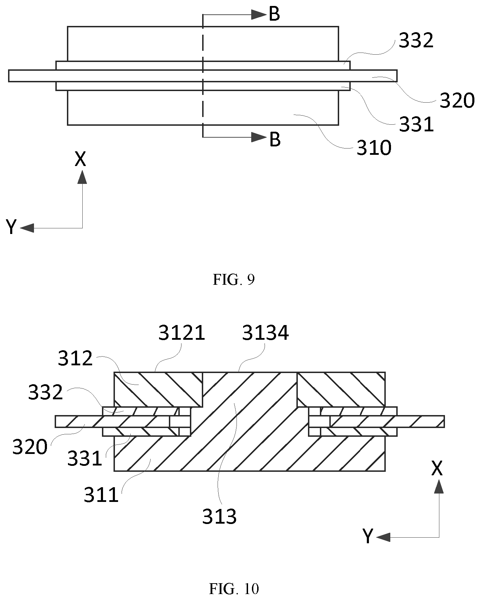

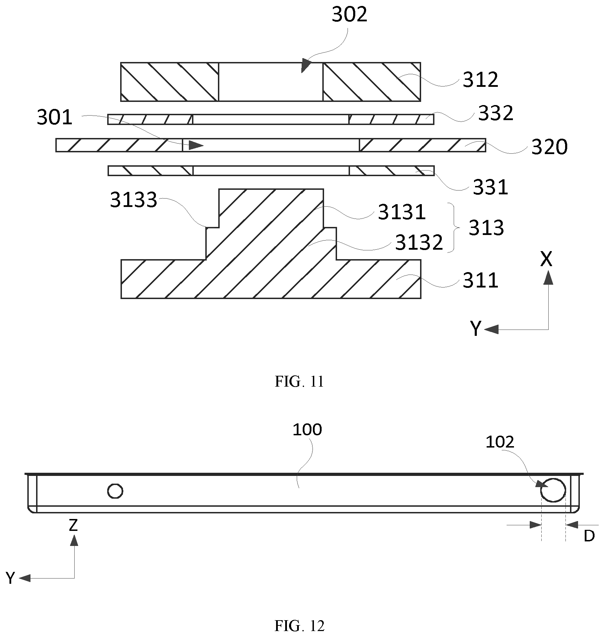

Referring to FIGs. 8 to 11, FIG. 8 is a schematic three-dimensional structural diagram of an electrode pole of an electrochemical apparatus according to some embodiments of this application; FIG. 9 is a schematic structural diagram of an electrode pole of an electrochemical apparatus from one perspective according to some embodiments of this application; FIG. 10 is a schematic structural cross-sectional view of an electrode pole of an electrochemical apparatus according to some embodiments of this application; and FIG. 11 is a schematic structural exploded view of an electrode pole of an electrochemical apparatus according to some embodiments of this application.

In some embodiments, the electrode pole 300 includes an electrode pole body 310, a connection plate 320, and a sealing member 330. The connection plate 320 is a metal plate, and the connection plate 320 is disposed at the first through hole 102 and connected to the first sidewall 110. A second through hole 301 is provided in the connection plate 320, the electrode pole body 310 runs through the second through hole 301, the sealing member 330 is disposed between the connection plate 320 and the electrode pole body 310, and the second segment 420 is connected to the electrode pole body 310.

The electrode pole 300 includes an electrode pole body 310, a connection plate 320, and a sealing member 330. The connection plate 320 is a metal plate, and the connection plate 320 is disposed at the first through hole 102 and connected to the first sidewall 110, allowing the entire electrode pole 300 to be directly mounted on the first sidewall 110, with lower preparation and installation difficulty and better universality of the electrode pole 300. A second through hole 301 is provided in the connection plate 320, the electrode pole body 310 runs through the second through hole 301, the sealing member 330 is disposed between the connection plate 320 and the electrode pole body 310, and the second segment 420 is connected to the electrode pole body 310, enabling the sealing member 330 to achieve sealing between the connection plate 320 and the electrode pole body 310. The connection plate 320 is connected to the first sidewall 110 and can achieve sealing between the housing 100 and the electrode pole 300, providing a good sealing effect for the electrochemical apparatus 10.

In some embodiments, the connection plate 320 and the first sidewall 110 may be connected by welding, such as laser welding. By welding the connection plate 320 to the first sidewall 110, good sealing is achieved between the connection plate 320 and the first sidewall 110, reducing the likelihood of electrolyte leakage, and a large connection force is provided between the connection plate 320 and the first sidewall 110, making the connection plate 320 less likely to detach from the housing 100.

In some embodiments, the housing 100 and the connection plate 320 may both be made of materials such as stainless steel or nickel, which are resistant to rust, have a long service life, and facilitate welding between the housing 100 and the connection plate 320.

In some embodiments, a surface of the connection plate 320 may be provided with a passivation layer, and the sealing member 330 is bonded to the passivation layer.

Currently, in an electrochemical apparatus in which a sealing member is directly provided between an electrode pole body and a housing for sealing, the entire housing needs a passivation treatment for improving the sealing performance between the seal and the housing, resulting in large difficulty in processing and high costs. In this application, only the connection plate 320 needs a passivation treatment, resulting in small difficulty in processing and low costs. By forming a passivation layer on a surface of the connection plate 320 and bonding the sealing member 330 to the passivation layer, a connection bond can be formed between the sealing member 330 and the passivation layer, resulting in a better sealing effect between the sealing member 330 and the connection plate 320. Additionally, the passivation layer can reduce a corrosion rate of the connection plate 320, thereby extending the service life of the connection plate 320.

In some embodiments, the electrode pole body 310 may be made of an aluminum material, providing the characteristics such as oxidation resistance, high voltage endurance, high temperature resistance, and resistance to electrolyte corrosion.

In some embodiments, the electrode pole body 310 includes a first conductive portion 311, a second conductive portion 312, and a third conductive portion 313. The first conductive portion 311 is located on a first side of the connection plate 320 along a thickness direction of the connection plate 320, the second conductive portion 312 is located on a second side of the connection plate 320 opposite to the first side along the thickness direction of the connection plate 320, the third conductive portion 313 runs through the second through hole 301, and the third conductive portion 313 electrically connects the first conductive portion 311 and the second conductive portion 312.

In some embodiments, the sealing member 330 may be made of a polymer material, such as polypropylene (PP, polypropylene), providing good sealing performance and chemical resistance.

The sealing member 330 includes a first sealing member 331 and a second sealing member 332. The first sealing member 331 is disposed between the first conductive portion 311 and the connection plate 320, and the second sealing member 332 is disposed between the second conductive portion 312 and the connection plate 320.

The electrode pole body 310 includes a first conductive portion 311, a second conductive portion 312, and a third conductive portion 313. The first conductive portion 311, located on the first side of the connection plate 320 along the thickness direction of the connection plate 320, can be used to achieve electrical connection with another apparatus located on the first side of the connection plate 320. The second conductive portion 312, located on the second side of the connection plate 320 opposite to the first side along the thickness direction of the connection plate 320, can be used to achieve electrical connection with another apparatus located on the second side of the connection plate 320. The third conductive portion 313 runs through the second through hole 301, and the third conductive portion 313 electrically connects the first conductive portion 311 and the second conductive portion 312, enabling electrical connection between a component electrically connected to the first conductive portion 311 and a component electrically connected to the second conductive portion 312. The sealing member 330 includes a first sealing member 331 and a second sealing member 332. The first sealing member 331, disposed between the first conductive portion 311 and the connection plate 320, can achieve sealing between the first conductive portion 311 and the connection plate 320. The second sealing member 332, disposed between the second conductive portion 312 and the connection plate 320, can achieve sealing between the second conductive portion 312 and the connection plate 320. By providing the two sealing members which are the first sealing member 331 and the second sealing member 332, the reliability of the sealing between the electrode pole body 310 and the connection plate 320 can be improved.

In some embodiments, the first sealing member 331 and/or the second sealing member 332 extends into the second through hole 301. By making the first sealing member 331 and/or the second sealing member 332 extend into the second through hole 301, a sealing connection area between the first sealing member 331 and/or the second sealing member 332 and the connection plate 320 can be increased. Thus, under a condition that a total sealing connection area between the first sealing member 331 and/or the second sealing member 332 and the connection plate 320 remains unchanged, a width of the first sealing member 331 and/or the second sealing member 332 in a direction perpendicular to a centerline of the second through hole 301 (direction Y or Z) may be set to be smaller, reducing the overall dimension of the electrode pole 300 on a plane perpendicular to the centerline of the second through hole 301 (plane Y-Z), thereby allowing for adaptation to a thinner housing 100, and further improving the universality of the electrode pole 300.

In some embodiments, the first sealing member 331 and the second sealing member 332 may be integrally formed. After the first sealing member 331 and the second sealing member 332 are assembled with the electrode pole body 310 and the connection plate 320, the structural stability is improved, and the sealing connection area between the first sealing member 331 and the connection plate 320 and the sealing connection area between the second sealing member 332 and the connection plate 320 can be further increased.

In some embodiments, the first conductive portion 311 and the third conductive portion 313 are integrally formed, the second conductive portion 312 is provided with an insertion hole 302, and a portion of the third conductive portion 313 is inserted into the insertion hole 302 and electrically connected to the second conductive portion 312 within the insertion hole 302.

By the integral formation of the first conductive portion 311 and the third conductive portion 313, the overall structure of the first conductive portion 311 and the third conductive portion 313 is more stable, and the electrode pole body 310 includes only two parts (one part includes the first conductive portion 311 and the third conductive portion 313, and the other part is the second conductive portion 312), achieving a simpler preparation process of the electrode pole body 310. By providing the insertion hole 302 on the second conductive portion 312, a portion of the third conductive portion 313 is inserted into the insertion hole 302 and electrically connected to the second conductive portion 312 within the insertion hole 302, enabling connection between the second conductive portion 312 and the third conductive portion 313 through insertion, making the second conductive portion 312 less likely to move relative to the third conductive portion 313, making the overall structure of the electrode pole body 310 more stable, and improving the reliability of the electrical connection between the second conductive portion 312 and the third conductive portion 313.

In some embodiments, through insertion connection of the second conductive portion 312 and the third conductive portion 313, the second conductive portion 312 and the third conductive portion 313 press against the sealing member 330 and the connection plate 320 in the first direction X, to fix the sealing member 330 and the connection plate 320 between the second conductive portion 312 and the third conductive portion 313.

In some other embodiments, the positions of the electrode pole body 310 and the connection plate 320 may be fixed first, and then the sealing member 330 is formed between the electrode pole body 310 and the connection plate 320 by injection molding.

In some other embodiments, the first conductive portion 311 and the third conductive portion 313 may be separately arranged and connected by insertion connection, welding, or bonding. For example, the first conductive portion 311 is provided with a second insertion hole (not shown in the figure), and a portion of the third conductive portion 313 is inserted into the second insertion hole and electrically connected to the first conductive portion 311 within the second insertion hole, enabling connection between the first conductive portion 311 and the third conductive portion 313 through insertion, making the first conductive portion 311 less likely to move relative to the third conductive portion 313, making the overall structure of the electrode pole body 310 more stable, and achieving high reliability of the electrical connection between the first conductive portion 311 and the third conductive portion 313.

In some other embodiments, the first conductive portion 311, the second conductive portion 312, and the third conductive portion 313 may be integrally shaped. For example, after the electrode pole body 310 penetrates through the connection plate 320 and the sealing member 330 from one side of the connection plate 320 and the sealing member 330, the second conductive portion 312 is formed on the second side of the connection plate 320 and the sealing member 330 by riveting.

In some embodiments, the third conductive portion 313 includes a first part 3131 and a second part 3132 connected to each other. The first part 3131 is inserted into the insertion hole 302, the second part 3132 is located between the first part 3131 and the first conductive portion 311, and a cross-sectional area of the first part 3131 is smaller than a cross-sectional area of the second part 3132, so that a step surface 3133 is formed between the first part 3131 and the second part 3132. The second conductive portion 312 abuts against the step surface 3133.

A cross section of the first part 3131 is a section of the first part 3131 on a plane perpendicular to a thickness direction of the connection plate 320, and a cross section of the second part 3132 is a section of the second part 3132 on a plane parallel to the thickness direction of the connection plate 320.

The thickness direction of the connection plate 320 is the first direction X, and the plane perpendicular to the thickness direction of the connection plate 320 is the plane Y-Z.

The third conductive portion 313 includes a first part 3131 and a second part 3132 connected to each other. The first part 3131 is inserted into the insertion hole 302, the second part 3132 is located between the first part 3131 and the first conductive portion 311, and a cross-sectional area of the first part 3131 is smaller than a cross-sectional area of the second part 3132, so that a step surface 3133 is formed between the first part 3131 and the second part 3132. The second conductive portion 312 abuts against the step surface 3133, ensuring a fixed distance between the second conductive portion 312 and the first conductive portion 311. When the second conductive portion 312 is inserted into the third conductive member 213, sufficient compression is achieved when the second conductive portion 312 acts on the first sealing member 331 and the second sealing member 332 to provide a good sealing effect, and structural damage of the first sealing member 331 and the second sealing member 332 caused by excessive squeezing of the second conductive portion 312 can be prevented to reduce the likelihood of the sealing effect being affected.

In some other embodiments, along the thickness direction of the connection plate 320 (first direction X), the dimension of the third conductive portion 313 on the plane perpendicular to the thickness direction of the connection plate 320 (plane Y-Z) remains unchanged, simplifying the preparation process of the third conductive portion 313 and the assembly of the sealing member and the connection plate 320 with the third conductive portion 313.

In some embodiments, the third conductive portion 313 has a third end face 3134 facing away from the first conductive portion 311, the second conductive member 212 has a fourth end face 3121 facing away from the first conductive portion 311, and the third end face 3134 is flush with the fourth end face 3121.

The third conductive portion 313 has the third end face 3134 facing away from the first conductive portion 311, and the second conductive portion 312 has the fourth end face 3121 facing away from the first conductive portion 311. The third end face 3134 is flush with the fourth end face 3121, so when the second side of the electrode pole 300 (the side where the third end face 3134 and the fourth end face 3121 are located) is electrically connected to another component through abutment, both the third end face 3134 and the fourth end face 3121 can serve as a connection surface, providing a larger area of the connection surface, a larger connection force with other components, and better reliability.

The third end face 3134 being flush with the fourth end face 3121 can be understood in a broad sense. To be specific, when a distance between the plane where the third end face 3134 is located and the plane where the fourth end face 3121 is located in the thickness direction of the connection plate 320 is within an error range, any error range within 2 mm can be considered as flush.

In some other embodiments, the third end face 3134 may alternatively be recessed relative to the fourth end face 3121, so that when the second side of the electrode pole 300 (the side where the third end face 3134 and the fourth end face 3121 are located) is electrically connected to another component through abutment, the fourth end face 3121 can serve as a connection surface.

In some other embodiments, the third end face 3134 may alternatively protrude relative to the fourth end face 3121, so that when the second side of the electrode pole 30 (the side where the third end face 3134 and the fourth end face 3121 are located) is electrically connected to another component through abutment, the third end face 3134 can serve as a connection surface.

In some other embodiments, the second conductive portion 312 may not be provided with an insertion hole, the second conductive portion 312 has a third end face (not labeled in the figure) facing the first conductive portion 311, and the third end face abuts against the third end face 3134 of the third conductive portion 313 to achieve electrical connection. By the integral formation of the first conductive portion 311 and the third conductive portion 313, the overall structure of the first conductive portion 311 and the third conductive portion 313 can be more stable, and the preparation process of the electrode pole body 310 is simpler. The third conductive portion 313 has a first end face facing away from the first conductive portion 311, and the second conductive portion 312 has a third end face facing the first conductive portion 311. The first end face abuts against the third end face to achieve electrical connection. The second conductive portion 312 and the third conductive portion 313 are electrically connected through attachment, which can simplify the assembly process of the second conductive portion 312 and the third conductive portion 313 and improve the preparation efficiency of the electrode pole 300.

In some embodiments, the first conductive portion 311 is disposed on an inner side of the first sidewall 110. By disposing the first conductive portion 311 on the inner side of the first sidewall 110, the first conductive portion 311 can be electrically connected to the first connector 400, allowing the first end face of the third conductive portion 313 facing away from the first conductive portion 311 and the second conductive portion 312 to be exposed outside the housing 100 for electrical connection with other components.

In some other embodiments, the first conductive portion 311 may alternatively be disposed on an outer side of the first sidewall 110. By disposing the first conductive portion 311 on the outer side of the wall portion, the second conductive portion 312 and/or the third conductive portion 313 can be electrically connected to the first connector 400, allowing the first conductive portion 311 to be exposed outside the housing 100 for electrical connection with other components.

Referring to FIG. 12, FIG. 12 is a schematic structural diagram of a housing of an electrochemical apparatus from one perspective according to some embodiments of this application.

In some embodiments, the first through hole 102 is a circular hole, and a diameter D of the first through hole 102 satisfies 1 mm≤D≤10 mm. For example, D may be 1 mm, 5 mm, or 10 mm.

The first through hole 102 being circular can facilitate the preparation and shaping of the first through hole 102 and facilitate adaptation to electrode poles 300 of different sizes. As long as a dimension of a portion of the electrode pole 300 running through the first through hole 102 on the plane Y-Z is less than or equal to a diameter of the first through hole 102, the electrode pole 300 can be mounted on the first sidewall 110 through the first through hole 102. By setting the diameter D of the first through hole 102 to 1 mm to 10 mm, the first through hole 102 has a sufficient space to allow the electrode pole 300 to pass through. Additionally, when the electrode pole 300 is mounted on the first sidewall 110, an edge of the electrode pole 300 is less likely to extend beyond an edge of the first sidewall 110, reducing the likelihood of an increase in space occupation of the electrochemical apparatus 10 and also reducing the possibility of interference between the electrode pole 300 and another apparatus (not shown in the figure).

Referring to FIG. 2, in some embodiments, the electrode assembly 200 further includes a second tab 230 having a polarity opposite to a polarity of the first tab 220, and the second tab 230 is disposed on a side of the main body 210 close to the first sidewall 110. The electrochemical apparatus 10 further includes a second connector 500, and the second connector 500 electrically connects the second tab 230 and the housing 100.

In some embodiments, the first tab 220 may be a positive electrode tab, and the second tab 230 may be a negative electrode tab.

The electrode assembly 200 further includes a second tab 230 having a polarity opposite to a polarity of the first tab 220, and the second tab 230 is disposed on a side of the main body 210 close to the first sidewall 110, allowing the first tab 220 and the second tab 230 to share a spacing space between the main body 210 and the first sidewall 110, thereby reducing the space occupied by the first tab 220 and the second tab 230 and facilitating an increase in the energy density of the electrochemical apparatus 10. The electrochemical apparatus 10 further includes a second connector 500, and the second connector 500 electrically connects the second tab 230 and the housing 100, enabling the main body 210 to be electrically connected to another apparatus via the second tab 230, the second connector 500, and the housing 100, thereby allowing other apparatuses that are electrically connected to the electrode pole 300 and the housing 100 respectively to form a complete electrical connection loop with the electrochemical apparatus 10.

In some embodiments, the second connector 500 is U-shaped.

Configuring the second connector 500 in a U shape facilitates the connection of the second connector 500 to both the second tab 230 and the housing 100 after the electrode assembly 200 is mounted into the housing 100. As compared to some embodiments, both the first connector (not shown in the figure) and the second connector 500 are configured in a U shape, since a portion of the electrode pole 300 is accommodated in the accommodation space 101, and the first connector 400 is connected to both the electrode pole 300 and the first tab 220, while the second connector 500 is connected to both the housing 100 and the second tab 230, in the first direction X, the space occupied by the U-shaped first connector and the portion of the electrode pole 300 is larger than the space occupied by the U-shaped second connector 500. In this application, the first connector 400 includes a first segment 410, a second segment 420, and a third segment 430, and when viewed along the first direction X, the first segment 410 and the second segment 420 do not overlap, reducing the space occupied by the first connector 400 and the portion of the electrode pole 300 in the first direction X. This reduces the spacing distance between the main body 210 and the first sidewall 110, provides more space in the accommodation space 101 for accommodating the electrode assembly 200, and enables the electrode assembly 200 to have a larger volume, thereby increasing the energy density of the electrochemical apparatus 10.

This application provides an electric device including the electrochemical apparatus 10 provided in any of the above embodiments, where the electrochemical apparatus 10 is configured to provide electrical energy.

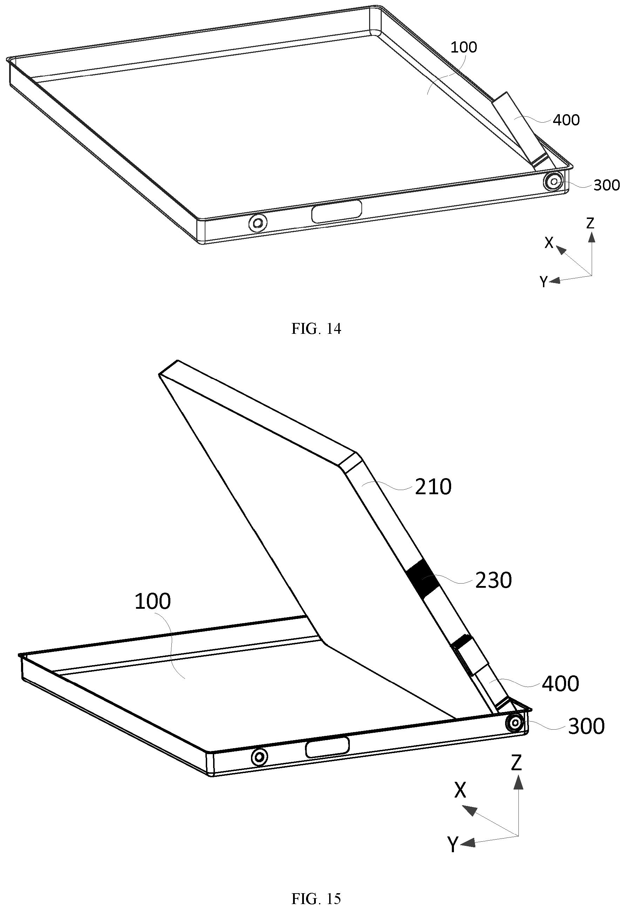

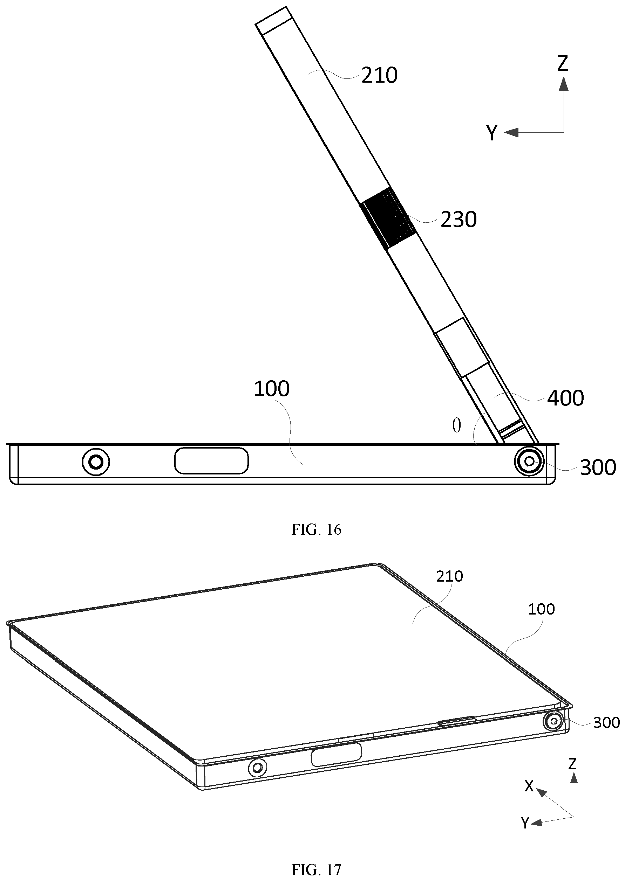

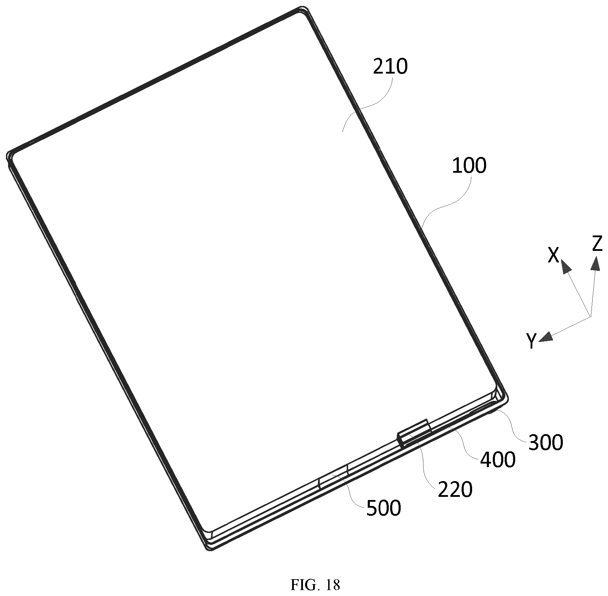

Referring to FIGs. 13 to 18 and FIG. 1, FIG. 13 is a schematic flowchart of a preparation method for an electrochemical apparatus according to some embodiments of this application; FIG. 14 is a schematic three-dimensional diagram of a partial structure of an electrochemical apparatus according to some embodiments of this application; FIG. 15 is a schematic three-dimensional diagram of a partial structure of an electrochemical apparatus according to some embodiments of this application; FIG. 16 is a schematic diagram of a partial structure of an electrochemical apparatus from one perspective according to some embodiments of this application; FIG. 17 is a schematic three-dimensional diagram of a partial structure of an electrochemical apparatus according to some embodiments of this application; and FIG. 18 is a schematic three-dimensional diagram of a partial structure of an electrochemical apparatus according to some embodiments of this application.

This application provides a preparation method for an electrochemical apparatus, including the following steps.

S710: Provide a housing 100, an electrode assembly 200, an electrode pole 300, and a first connector 400, where a first through hole 102 is provided in a first sidewall 110 of the housing 100.

In some embodiments, the first through hole 102 may be provided in the first sidewall 110 of the housing 100 by methods such as laser etching or stamping.

S720: Make the electrode pole 300 run through the first through hole 102.

In some embodiments, making the electrode pole 300 run through the first through hole 102 means that a portion of the electrode pole 300 is located within the accommodation space 101 formed in the housing 100, and another portion is located outside the housing 100. In this case, the electrode pole 300 can move relative to the first sidewall 110.

S730: Connect the electrode pole 300 to a first segment 410 of the first connector 400, and connect a first tab 220 of the electrode assembly 200 to a second segment 420 of the first connector 400.

Referring to FIG. 14, in some embodiments, the process of connecting the first connector 400 to the first tab 220 of the electrode assembly 200 is completed outside the housing 100, facilitating the connection operation such as welding operation between the first connector 400 and the first tab 200. Thus, there is no need to reserve a welding space for the first connector 400 within the accommodation space 101 of the housing 100, thereby reducing the spacing distance between the main body 210 of the electrode assembly 200 and the first sidewall 110 of the housing 100.

S740: Rotate the electrode assembly 200, the first connector 400, and the electrode pole 300 together around the first through hole 102, to allow the electrode assembly 200 to be mounted into the accommodation space 101 of the housing 100 (as shown in FIG. 16).

S750: Fix the electrode pole 300 to the housing 100.

In some embodiments, the electrode pole 300 and the first sidewall 110 of the housing 100 may be welded by laser welding.

The electrode pole 300 is connected to the first segment 10 of the first connector 400, the first tab 220 of the electrode assembly 200 is connected to the second segment 420 of the first connector 400, and then the electrode assembly 200, the first connector 400, and the electrode pole 300 are rotated together around the first through hole 102, to allow the electrode assembly 200 to be mounted into the accommodation space 101 of the housing 100. Thus, the connection between the first segment 410 of the first connector 400 and the electrode pole 300 as well as the connection between the second segment 420 of the first connector 400 and the first tab 220 of the electrode assembly 200 are achieved before the electrode assembly 200 is mounted into the accommodation space 101, so that more convenient connection operation is achieved. Additionally, there is no need to reserve some space of the accommodation space 101 for connecting the first connector 400 to the electrode pole 300 and connecting the first connector 400 to the first tab 220, reducing the space occupied by the first connector 400, reducing the spacing distance between the main body 210 of the electrode assembly 200 and the first sidewall 110, providing more space in the accommodation space 101 for accommodating the electrode assembly 200, and enabling the electrode assembly 200 to have a larger volume, thereby increasing the energy density of the electrochemical apparatus 10.

In some embodiments, the connecting the electrode pole 300 to the first segment 410 of the first connector 400 and connecting the first tab 220 of the electrode assembly 200 to the second segment 420 of the first connector 400 include the following steps.

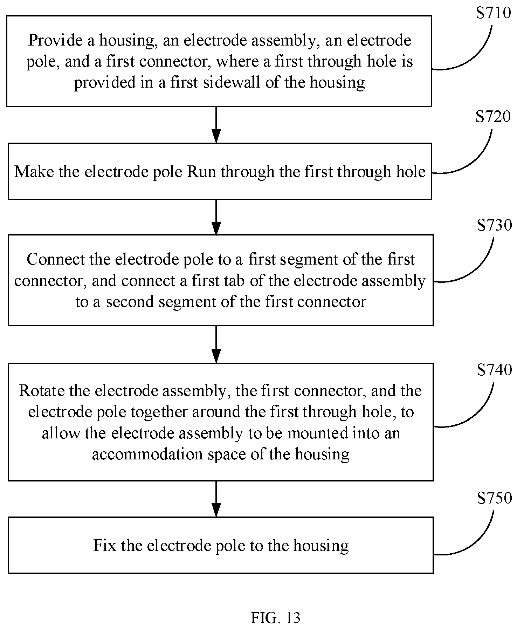

Connect the electrode pole 300 to the first segment 410 of the first connector 400, and position the second segment 420 of the first connector 400 outside the housing 100 (as shown in FIG. 13).

Connect the first tab 220 of the electrode assembly 200 to the second segment 420 of the first connector 400 located outside the housing 100 (as shown in FIG. 14).

First, the electrode pole 300 is connected to the first segment 410 of the first connector 400, without obstruction from the main body 210 of the electrode assembly 200, so that convenient connection operation is achieved. The second segment 420 of the first connector 400 is located outside the housing 100, and the first tab 220 of the electrode assembly 200 is connected to the second segment 420 of the first connector 400 located outside the housing 100, also without obstruction from other components, so that convenient connection operation is achieved.

In some other embodiments, the first tab 220 of the electrode assembly 200 may be connected to the second segment 420 of the first connector 400 first, and then the electrode pole 300 is connected to the first segment 410 of the first connector 400.

In some embodiments, the positioning the second segment 420 of the first connector 400 outside the housing 100 includes the following step.

Set an included angle θ between a length direction of the first connector 400 and an edge of the first sidewall 110 to 45° to 90° (as shown in FIG. 15). For example, θ may be 45°, 60°, 90°, or the like.

The edge of the first sidewall 110 is parallel to the second direction Y.

By positioning the second segment 420 of the first connector 400 outside the housing 100, the included angle between the length direction of the first connector 400 and the edge of the first sidewall 110 being 45° to 90° can facilitate the connection between the second segment 420 of the first connector 400 and the first tab 220 of the electrode assembly 200 and also facilitate the rotation of the electrode assembly 200, the first connector 400, and the electrode pole 300 together around the first through hole 102 after the second segment 420 of the first connector 400 is connected to the first tab 220, to allow the electrode assembly 200 to be mounted into the accommodation space 101 of the housing 100.

The preparation method for an electrochemical apparatus further includes the following steps.

S760: Connect a second connector 500 to a second tab 230 of the electrode assembly 200 and to the housing 100, respectively.

In some embodiments, the second connector 500 may be respectively connected to the second tab 230 and to the housing 100 by welding (as shown in FIG. 17).

S770: Dispose a housing cover 600 on the housing 100 (as shown in FIG. 1).

In some embodiments, the housing cover 600 and the housing 100 may be welded by laser welding, so that the housing 100 and the housing cover 600 together form a closed accommodation space 101.

It should be noted that, without conflict, some embodiments and features in these embodiments of this application can be combined with each other.

The above are only preferred embodiments of this application and are not intended to limit this application. For those skilled in the art, various modifications and changes can be made to this application. Any modifications, equivalent replacements, improvements, and the like made within the spirit and principles of this application should be included in the scope of protection of this application.

## Claims

1. An electrochemical apparatus, comprising:
a housing provided with an accommodation space, wherein a first through hole is provided in a first sidewall of the housing;
an electrode assembly accommodated in the accommodation space, wherein the electrode assembly comprises a main body and a first tab, and the first tab is disposed on a side of the main body close to the first sidewall;
an electrode pole running through the first through hole; and
a first connector disposed in the accommodation space, wherein the first connector comprises a first segment and a second segment, the first segment is connected to the first tab, the second segment is connected to the electrode pole, and when viewed along a first direction, the first segment and the second segment do not overlap, wherein the first direction is parallel to an arrangement direction of the electrode assembly and the first sidewall;
wherein the housing further comprises a second sidewall; the second sidewall is connected to the first sidewall; the first connector comprises a first end face and a second end face disposed opposite to each other along a length direction; a distance from the first end face to a center of the electrode pole is less than a distance from the second end face to the center of the electrode pole; and a distance from the center of the electrode pole to the first end face along a second direction is L1, a distance from the center of the electrode pole to a bottom wall of the housing is L2, and a distance from the center of the electrode pole to the second sidewall is L3, satisfying conditions L1≤L2 and L1≤L3.

2. The electrochemical apparatus according to claim 1, wherein a thickness of the housing is H, satisfying 1/2*H≤L2≤H.

3. The electrochemical apparatus according to claim 1, wherein the distance L2 from the center of the electrode pole to the bottom wall of the housing and the distance L3 from the center of the electrode pole to the second sidewall further satisfy L2=L3.

4. The electrochemical apparatus according to claim 1, wherein the distance L3 from the center of the electrode pole to the second sidewall satisfies 3 mm≤L3≤15 mm.

5. The electrochemical apparatus according to claim 1, wherein a spacing distance between the main body and the first sidewall is S, satisfying 1.9 mm≤S≤2.05 mm.

6. The electrochemical apparatus according to claim 1, wherein the first connector further comprises a third segment, the third segment connects the first segment and the second segment, and the first segment and the second segment respectively extend in opposite directions from two ends of the third segment.

7. The electrochemical apparatus according to claim 6, wherein the first segment is disposed at an angle to the third segment, and the second segment is disposed at an angle to the third segment.

8. The electrochemical apparatus according to claim 7, wherein an angle between the first segment and the third segment is α, an angle between the second segment and the third segment is β, satisfying 45°≤α≤90° and 45°≤β≤90°.

9. The electrochemical apparatus according to claim 7, wherein the third segment protrudes from the second segment in a direction toward the first sidewall.

10. The electrochemical apparatus according to claim 1, wherein the first connector is a straight structure.

11. The electrochemical apparatus according to claim 1, wherein a thickness of the first connector is T, satisfying 0.05 mm≤T≤0.1 mm.

12. The electrochemical apparatus according to claim 1, wherein the electrode pole comprises an electrode pole body, a connection plate, and a sealing member, wherein the connection plate is a metal plate, the connection plate is disposed at the first through hole and connected to the first sidewall, a second through hole is provided in the connection plate, the electrode pole body runs through the second through hole, the sealing member is disposed between the connection plate and the electrode pole body, and the second segment is connected to the electrode pole body.

13. The electrochemical apparatus according to claim 12, wherein the electrode pole body comprises a first conductive portion, a second conductive portion, and a third conductive portion, wherein the first conductive portion is located on a first side of the connection plate along a thickness direction of the connection plate, the second conductive portion is located on a second side of the connection plate opposite to the first side along the thickness direction of the connection plate, the third conductive portion runs through the second through hole, and the third conductive portion electrically connects the first conductive portion and the second conductive portion; and
the sealing member comprises a first sealing member and a second sealing member, the first sealing member is disposed between the first conductive portion and the connection plate, and the second sealing member is disposed between the second conductive portion and the connection plate.

14. The electrochemical apparatus according to claim 13, wherein the first conductive portion and the third conductive portion are integrally formed, the second conductive portion is provided with an insertion hole, and a portion of the third conductive portion is inserted into the insertion hole and electrically connected to the second conductive portion within the insertion hole.

15. The electrochemical apparatus according to claim 1, wherein a diameter D of the first through hole satisfies 1 mm≤D≤10 mm.

16. The electrochemical apparatus according to claim 1, wherein the electrode assembly further comprises a second tab having a polarity opposite to a polarity of the first tab, the second tab is disposed on a side of the main body close to the first sidewall, the electrochemical apparatus further comprises a second connector, and the second connector electrically connects the second tab and the housing.

17. The electrochemical apparatus according to claim 16, wherein the second connector is U-shaped.

18. An electric device, comprising the electrochemical apparatus according to any one of claims 1 to 17, wherein the electrochemical apparatus is configured to provide electrical energy.

19. A preparation method for an electrochemical apparatus, comprising
providing a housing, an electrode assembly, an electrode pole, and a first connector, wherein a first through hole is provided in a first sidewall of the housing;
making the electrode pole run through the first through hole;
connecting the electrode pole to a first segment of the first connector, and positioning a second segment of the first connector outside the housing, wherein an included angle between a length direction of the first connector and an edge of the first sidewall is set to 45° to 90°;
connecting a first tab of the electrode assembly to the second segment of the first connector;
rotating the electrode assembly, the first connector, and the electrode pole together around the first through hole, to allow the electrode assembly to be mounted within an accommodation space of the housing; and
fixing the electrode pole to the housing.
